# EUROPEAN PATENT APPLICATION

(11) **EP 4 606 711 A1**
(43) Date of publication of application: **27.08.2025**
(21) Application number: 25156737.6
(22) Date of filing: 10.02.2025
(51) Int. Cl.: B65B 3/00, B65B 7/00, B65B 9/12, B65B 31/02, B65B 31/04, B65B 57/16, B65G 47/69, B65B 51/26, B65B 57/00, B65B 57/04, G05B 19/418

(54) **METHOD FOR OPERATING A PACKAGING MACHINE FOR PRODUCING SEALED PACKAGES CONTAINING A POURABLE PRODUCT AND PACKAGING MACHINE**

(30) Priority: 21.02.2024 IT 202400003676
(71) Applicant: Tetra Laval Holdings & Finance S.A., 1009 Pully (CH)
(72) Inventor: MONARI, Mattia, 41123 Modena (IT); ZERRI, Fabio, 41123 Modena (IT); GALLERANI, Stefano, 41123 Modena (IT); GARUTI, Gianpaolo, 41123 Modena (IT); FAGLIONI, Stefano, 41123 Modena (IT)
(74) Representative: Tetra Pak Patent Attorneys

(57) **Abstract**

There is described a method for operating a packaging machine (1) for producing sealed packages (2) containing a pourable product starting from a web (4) of packaging material, the method comprising the steps of:
- advancing the web (4);
- folding the web (4) into a tube (3);
- longitudinally sealing the tube (3);
- filling the tube (3) with the pourable product;
- forming and transversally sealing the tube (3) so as to obtain a sequence of packs (2a);
- folding the packs (2a) to obtain a plurality of packages (2);
wherein the method further comprises the steps of:
- temporarily accumulating the folded packages (2) in a buffer (13);
- measuring an accumulation level (L) of packages (2) in said buffer (13);
- modulating a production capacity of the packaging machine (1), defined as a number of folded packages (2) produced per unit of time, as a function of the measured accumulation level (L).

## Description

### TECHNICAL FIELD

The present invention relates to a method for operating a packaging machine for producing sealed packages containing a pourable product, preferably a pourable food product.

The present invention further relates to a packaging machine (and/or packaging line) for producing sealed packages containing a pourable product, preferably a pourable food product.

### BACKGROUND ART

As it is generally known, many pourable food products, such as fruit juice, UHT (ultra-high temperature-treated) milk, wine, tomato sauce, etc., are sold in packages made of sterilized packaging material.

A typical example is the parallelepiped-shaped package for pourable food products known as Tetra Brik Aseptic (registered trademark), which is made by folding and sealing a laminated web of packaging material.

The packaging material has a multilayer structure comprising a base layer, e.g. made of paper, covered on both sides with layers of heat-seal plastic material, e.g. polyethylene.

In the case of aseptic packages for long-storage products, such as UHT milk, the packaging material also comprises a layer of oxygen-barrier material, e.g. an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging machines, which form and fill the packages starting from a multilayer web of packaging material.

In particular, a continuous tube is formed from the web of packaging material which is initially wound in a reel and fed through a plurality of unwinding rollers.

The web of packaging material is typically maintained in a closed, sterile environment, and, while advanced by the aforementioned unwinding rollers, is folded to form the tube by means of a known web folding unit and then sealed longitudinally.

In order to perform the package forming operations, the tube is continuously fed along a straight vertical direction, is filled with the sterilized food product from above and is formed, sealed and subsequently cut along equally spaced transversal cross-sections extending along a direction orthogonal to the vertical direction, according to a manner known and not described in detail.

So-called pillow packs are obtained thereby, which have a longitudinal sealing band, a top transversal sealing band and a bottom transversal sealing band. The pillow packs are then cut at the cross-sections to be separated from one another and directed to a folding unit of the packaging machine for the final folding thereof.

The finished packages are thereby obtained.

According to one or more embodiments, the packaging machine is configured to receive the pourable product from an upstream equipment, such as a pourable product storage tank.

According to one or more embodiments, the packaging machine is configured to transfer the formed, sealed and folded packages to a downstream equipment.

The downstream equipment is configured to receive the formed and sealed (and folded) packages and to perform further actions on such packages.

For example, the downstream equipment may be a cap applicator, a straw applicator, a cardboard packer, a palletizer, or the like.

In some embodiments, the packaging machine (or a corresponding packaging line) conveniently comprises a known accumulator or buffer which is operatively (and physically) interposed between the folding unit and the downstream equipment and is configured to temporarily accumulate folded packages.

More precisely, the buffer is configured to accumulate folded packages so as to allow at least a temporary continuation of the production in case an event occurs in one or more downstream equipments, which event determines a temporary reduction of the productive capacity of the downstream equipment(s).

Hence, the buffer is configured to store and "absorb" a certain number of folded packages. This allows to avoid undesired repeated stops of the packaging machine each time an (even minor) event occurs.

When the buffer is full or reached a predetermined fullness level, the packaging machine finally stops.

Reducing the stops of the packaging machine is particularly desirable, as during each starting transient the components of the packaging machine undergo variable stresses which cause wear of the same components.

Although the known packaging machines operate satisfyingly well, a desire is felt to further optimize the production capacity of the packaging machines and to further increase lifetime of components.

### DISCLOSURE OF INVENTION

It is therefore an object of the present invention to provide a method for operating a packaging machine for the production of sealed packages which is designed to meet at least one of the above-mentioned needs in a straightforward and low-cost manner.

This object is achieved by a method as claimed in the appended independent claim 1.

In is a further object of the present invention to provide a packaging machine (and/or packaging line) for the production of sealed packages which is designed to meet at least one of the above-mentioned needs in a straightforward and low-cost manner.

This object is achieved by a packaging machine as claimed in the appended independent claim 12.

Preferred embodiments of the present invention are laid down in the appended dependent claims.

### BRIEF DESCRIPTION OF THE DRAWINGS

A non-limiting embodiment of the present invention will be described by way of example with reference to the accompanying drawings, in which:
Figure 1 is a schematic perspective view, with parts removed for clarity, of a packaging machine according to the present invention; and
Figure 2 is a chart which schematizes a control policy of the packaging machine of Figure 1;
Figure 3 illustrates a detail of the packaging machine of figure 1.

### BEST MODE FOR CARRYING OUT THE INVENTION

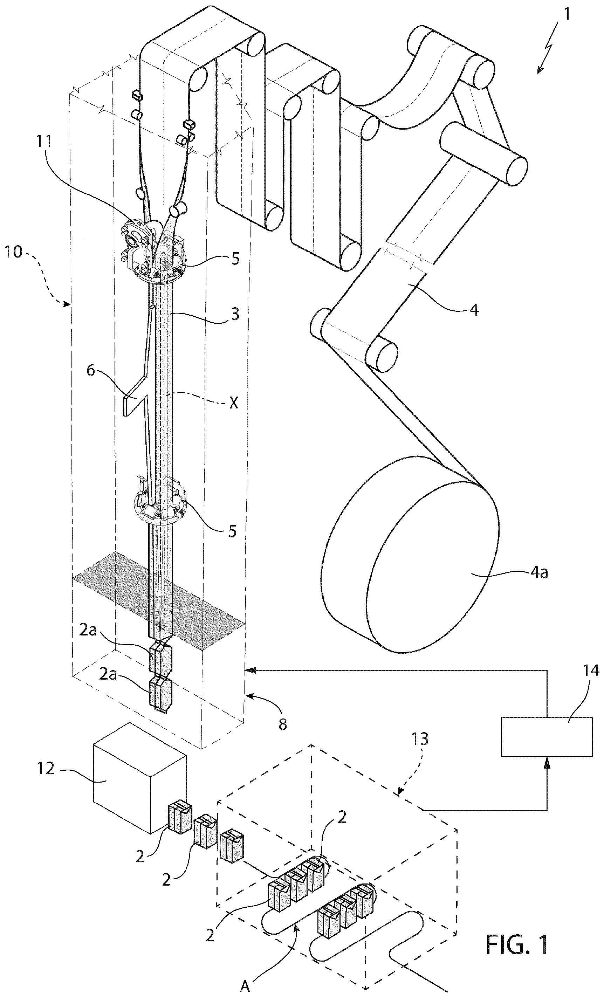

With reference to Figure 1, number 1 indicates as a whole a non-limiting example of a packaging machine configured for producing sealed packages 2 containing a pourable product, preferably a pourable food product such as pasteurized or UHT milk, water, fruit juice, wine, peas, beans, etc.

In detail, packaging machine 1 is configured to form, seal and fold packages 2 starting from a web 4 of packaging material, which is initially wound in a reel 4a, and then folded into a tube 3 of packaging material, according to a manner known and not described in detail.

Preferably, the packaging material has a multilayer structure (not shown), and comprises a layer of fibrous material, e.g. paper, covered on both sides with respective layers of heat-seal plastic material, e.g. polyethylene.

In the case of aseptic packages 2 for long-storage products, such as UHT milk, the packaging material also comprises a layer of gas-and-light barrier material, e.g. aluminum foil or ethylene vinyl alcohol (EVOH) film, which is superimposed on a layer of heat-seal plastic material, and is in turn covered with another layer of heat-seal plastic material, the latter forming the inner face of package 2 eventually contacting the pourable product.

Packaging machine 1 is configured to fill, form and seal a succession of packages 2 starting from web 4.

Preferably, packaging machine 1 is part of a packaging line (known per se and not shown) configured for producing, grouping and boxing a plurality of packages 2 in a known manner.

The packaging line may comprise one or more upstream equipments (not shown), such as a pourable product storage tank. Accordingly, packaging machine 1 is configured to receive the pourable product from such upstream equipment.

The packaging line may comprise one or more downstream equipments (not shown). Each downstream equipment is configured to receive the formed and sealed (and folded) packages and to perform further actions on such packages. For example, the downstream equipment may include a cap applicator, a straw applicator, a cardboard packer, a palletizer, or the like.

As schematically shown in Figure 1, packaging machine 1 comprises conveying means configured to advance the web 4 along an advancement path.

Packaging machine 1 comprises a tube folding device 5 for progressively folding the advancing web 4 into a tube 3 of packaging material, in a manner known and not described in detail.

Packaging machine 1 comprises a sealing element 6 for providing tube 3 with a longitudinal seal, in a manner known and not described in detail.

Tube folding device 5 and sealing element 6 define together a tube forming unit.

Packaging machine 1 comprises a sterilization unit (not shown) configured for applying a sterilizing agent, for example containing hydrogen peroxide, on web 4 prior to its folding into tube 3.

Packaging machine 1 comprises a forming and sealing unit 8 (known per se and only schematically shown) for forming tube 3 by imparting a predetermined external shape, corresponding to a precursor of the shape of package 2, to successive longitudinal portions of tube 3, and for sealing tube 3 at equally spaced cross-sections.

Packaging machine 1 comprises an isolation chamber 10 internally defining an inner environment 111 containing a controlled atmosphere, in particular sterile and/or aseptic gas, preferably sterile and/or aseptic air, and housing the forming and sealing unit 8 and the tube folding device 5.

Packaging machine 1 comprises a filling system 11 (only partially shown) to fill tube 3 with the pourable product.

Preferably, forming and sealing unit 8 has a longitudinal axis X along which tube 3 is fed, in use.

Such longitudinal axis X is parallel to a straight direction, which preferably is a straight vertical direction.

Hence, in use, tube 3 is fed along the longitudinal axis X, downwards, and while being filled from above is formed and sealed by forming and sealing unit 8, according to a manner known and not described in detail.

More specifically, tube 3 is drawn (downwards) along the longitudinal axis by forming and sealing unit 8 in a known manner.

In this way, a plurality of pillow packs 2a are obtained.

Packaging machine 1 further comprises a folding unit 12 for folding the pillow packs 2a, thereby obtaining packages 2, according to a manner known and not described in detail.

In use, the folded packages 2 are then sequentially transferred towards the one or more downstream equipments.

Advantageously, packaging machine 1 (and/or packaging line) further comprises an accumulator or buffer 13 which is operatively (and physically) interposed between folding unit 12 and the one or more downstream equipments and/or which is configured to temporarily store or accumulate a number of folded packages 2 along an accumulation path A.

Hence, buffer 13 is arranged operatively downstream of folding unit 12. However, buffer 13 is part of the packaging machine (or packaging line) 1.

More precisely, buffer 13 is configured to accumulate folded packages 2 so as to ensure an at least temporary continuation of the production of packaging machine 1 in case an event occurs in one or more downstream equipments which event determines a temporary reduction or stop of the productive capacity of the downstream equipment(s).

Generally speaking, buffer 13 is configured to store and "absorb" a certain number of folded packages 2 so as to avoid undesired repeated stops of packaging machine 1 each time a stop event occurs, that is an event, internal or external to packaging machine 1, which requires or causes a temporary stopping of packaging machine 1.

In particular, in case the stop event is foreseen to last a long period of time (based on its identified type), then the control unit stops the machine because it is not worthwhile to fill the buffer since the machine would then be anyhow stopped once the buffer becomes full. On the other hand, in case the stop event is foreseen to last a short period of time, (based on its identified type), then the control unit refrains from stopping the machine and the packages are temporarily stored in the buffer, which will not become full before the machine can start again. In this second case, the stop of the machine is avoided.

Packaging machine 1 further comprises a control unit 14.

In light of the above, packaging machine 1 is configured to produce sealed and folded packages 2. In detail, packaging machine 1 produces packages 2 with a given production capacity.

In greater detail, the production capacity of packaging machine 1 is defined as a number of folded packages 2 produced per unit of time.

As a non-limiting example, packaging machine 1 may produce packages 2 with a production capacity expressed in number of packages 2 produced per hour.

According to an aspect of the present disclosure, control unit 14 is configured to measure an accumulation level L of packages 2 in buffer 13, i.e. along the aforementioned accumulation path, and to modulate the production capacity of packaging machine 1 as a function of the measured accumulation level L.

In particular, control unit 14 is configured to adjust the production capacity of packaging machine 1 from a first production capacity P1 to a second production capacity P2 smaller than first production capacity P1, and vice-versa. Preferably, both the first production capacity P1 and the second production capacity P2 are different than zero.

In other words, control unit 14 is configured to control a variation in the production capacity of packaging machine 1 between first production capacity P1 and second production capacity P2.

For example, first production capacity P1 may be a nominal production capacity of packaging machine 1.

First production capacity P1 may range between 10000 and 20000 packages 2 produced per hour, preferably may be 15000 packages 2 produced per hour.

Accordingly, second production capacity P2 may be a reduced production capacity of packaging machine 1.

Second production capacity P2 may range between 2000 and 8000 packages 2 produced per hour, preferably may be 4000 packages 2 produced per hour.

According to an aspect of the present disclosure, control unit 14 is configured to:
- set the production capacity of packaging machine 1 to second production capacity P2, if measured accumulation level L is equal to or above of a first accumulation level threshold L1; and/or
- set the production capacity of packaging machine 1 to first production capacity P1, if measured accumulation level L is equal to or below of a second accumulation level threshold L2, whereby second accumulation level threshold L2 is smaller than first accumulation level threshold L1.

Advantageously, control unit 14 is further configured to maintain the production capacity of packaging machine 1 at second production capacity P2 if measured accumulation level L is comprised between second accumulation level threshold L2 and first accumulation level threshold L1.

Conveniently, accumulation level L may be defined as a percentage of the total accumulation of buffer 13, which then corresponds to 100% accumulation level (buffer 13 completely full).

For example, first accumulation level threshold L1 may range between 45% and 65% of the total accumulation of buffer 13, preferably it may be set at 50% of the total accumulation of buffer 13.

For example, second accumulation level threshold L2 may range between 25% and 40% of the total accumulation of buffer 13, preferably it may be set at 35% of the total accumulation of buffer 13.

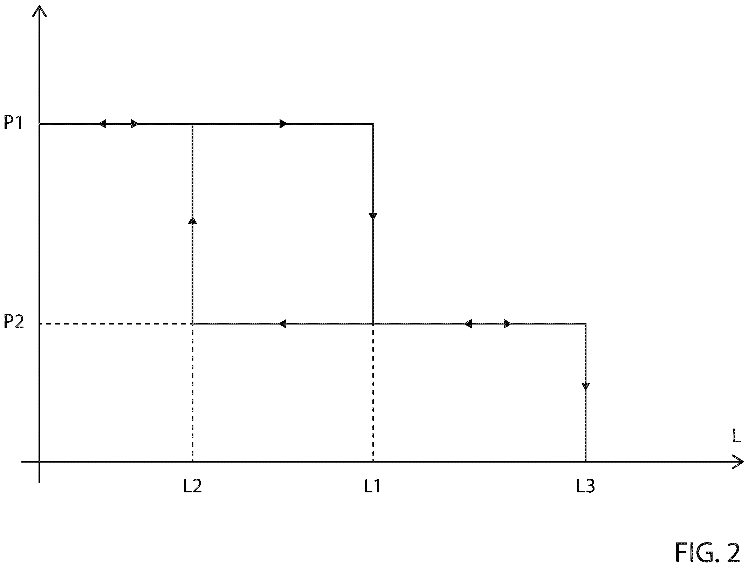

In light of the above, and with reference to Figure 2, a sort of hysteresis is defined in the logic control of the production capacity of packaging machine 1, thanks to the presence of two threshold levels, namely the first accumulation level threshold L1 and the second accumulation level threshold L2.

In this way a continuous and excessively repeated adjustment of the production capacity of packaging machine 1 may be avoided, as it would be the case with a single accumulation level threshold, which may be detrimental to a smooth production and to a nominal formation of packages 2.

In fact, as it is known, the correct formation of packages 2 requires a certain predetermined speed of tube 3 and a certain pressure within tube 3. Each time the production capacity is varied/adjusted, packaging machine 1 undergoes an inevitable variation transient, since the adjustment cannot be instantaneous.

Hence, the presence of the aforementioned hysteretic logic control significantly reduces the variation transients.

Conveniently, control unit 14 may be configured to emit or issue a warning if measured accumulation level L is equal to or above of a third accumulation level threshold L3, whereby third accumulation level threshold L3 is greater than first accumulation level threshold L1.

For example, third accumulation level threshold L3 may be set between 85% and 95% of the total accumulation of buffer 13, preferably at 90% of the total accumulation of buffer 13 for safety reasons.

In this way, an operator may readily intervene in case buffer 13 is filling at its maximum level and, for example, stop packaging machine 1.

Alternatively, or in addition, control unit 14 may be configured to stop packaging machine 1 if measured accumulation level L is equal to or above of third accumulation level threshold L3.

In this way, the stop of packaging machine 1 is automatized, thereby reducing the risk of human errors.

As a further aspect of the present disclosure, the Applicant observed that there are cases in which it may be preferable not performing the aforementioned modulation of the production capacity of packaging machine 1.

Accordingly, control unit 14 is further configured to:
- detect a stop event of packaging machine 1, which (as explained above) is defined as an event, internal or external to packaging machine 1, which requires or causes a temporary stopping of packaging machine 1;
- identify a type of said stop event; and
- selectively activate or deactivate, i.e. perform or not perform, the aforementioned modulation of the production capacity of packaging machine 1 as a function of the identified type of stop event.

It is noted that the type of stop event may be identified either by:
- the control unit, based on signals received from one or more sensors placed in the machine (in particular, in the downstream equipment); or
- the operator, which may see the stop event and communicate to the control unit which type it is.

In particular, control unit 14 is configured to:
- determine a time duration corresponding to said stop event;
- calculate a time interval for buffer 13 to reach third accumulation level threshold L3 with the production capacity set at second production capacity P2 and as a function of measured accumulation level L and of the determined time duration; and
- set the production capacity of packaging machine 1 to second production capacity P2 if the determined time duration is smaller than the calculated time interval.

Otherwise, if the determined time duration is greater than the calculated time interval, control unit 14 is configured to stop operation of the packaging machine 1.

In practice, control unit 14, in use, detects and identifies a type of stop event, for example a jamming in the downstream equipment (such as a jammed cap in the cap applicator).

Then, control unit 14 determines a time duration which corresponds to the stop event (according to a manner better described below).

Successively, control unit 14 calculates a time interval for buffer 13 reaching third accumulation level threshold L3, considering as if the production capacity was set at second production capacity P2, and depending on the actual measured accumulation level L.

Then, control unit 14 compares the calculated time interval and the determined time duration with one another.

At this point, only if the determined time duration is smaller than the calculated time interval, control unit 14 sets the production capacity at second production capacity P2, that is reduces the production capacity of packaging machine 1 so as to avoid the stop of packaging machine 1.

In fact, if the determined time duration is greater than the calculated time interval, buffer 13 will reach third accumulation level threshold L3 anyway, thereby leading to a stopping of packaging machine 1. Hence, in this case, it would not be worth to reduce the production capacity and incur in a variation transient, which would not avoid stopping of packaging machine 1 anyway.

In light of the above, a second level of logic control is introduced in packaging machine 1, based on which the hysteretic logic control explained above may or may not be activated/performed.

Advantageously, control unit 14 may be further configured to control a variation of first accumulation level threshold L1 and/or second accumulation level threshold L2 as a function of the calculated time interval.

In this way, a more dynamic hysteretic logic control may be performed, which is able to adapt to various production scenarios. Hence, flexibility and adaptability of packaging machine 1 is further enhanced.

Conveniently, control unit 14 may include a database containing a set of pre-recorded or pre-determined types of stop events, each associated with a respective time duration value. The respective time duration value of each type of stop event may be determined empirically - i.e. the machine operators may observe how much a certain type of stop event lasts and then fill the database accordingly.

In one embodiment, such database may be in form of a table loaded in an electronic memory support of control unit 14.

Such table may contain data related to the type of stop event and data related to the time duration associated with each type of stop event.

Accordingly, in order to perform the aforementioned determination of the time duration, control unit 14 is advantageously configured to:
- access the database;
- compare the identified type of stop event with the types of stop event contained in the database;
- extract the corresponding time duration value.

In particular, control unit 14 is configured to extract the time duration value that corresponds to the identified type of stop event.

Advantageously, control unit 14 may be further configured to:
- measure an actual time duration of an occurred stop event;
- compare the actual time duration of such stop event with the determined time duration corresponding to the same stop event;
- update the aforementioned database by recording the measured actual time duration in the database, if the actual time duration differs from the determined time duration.

In this way, an even more adaptive logic control of packaging machine 1 and its production capacity may be implemented by control unit 14. The logic control may in fact univocally adapt to each single packaging machine 1 and to the specific environmental conditions in which it stands and operates.

In other words, a third level of logic control is introduced in packaging machine 1, based on which the database is continuously updated depending on the specific environmental conditions in which each single packaging machine 1 operates. Therefore, each time duration value corresponding to the respective stop event will be more and more fitted and adapted to the specific packaging machine 1.

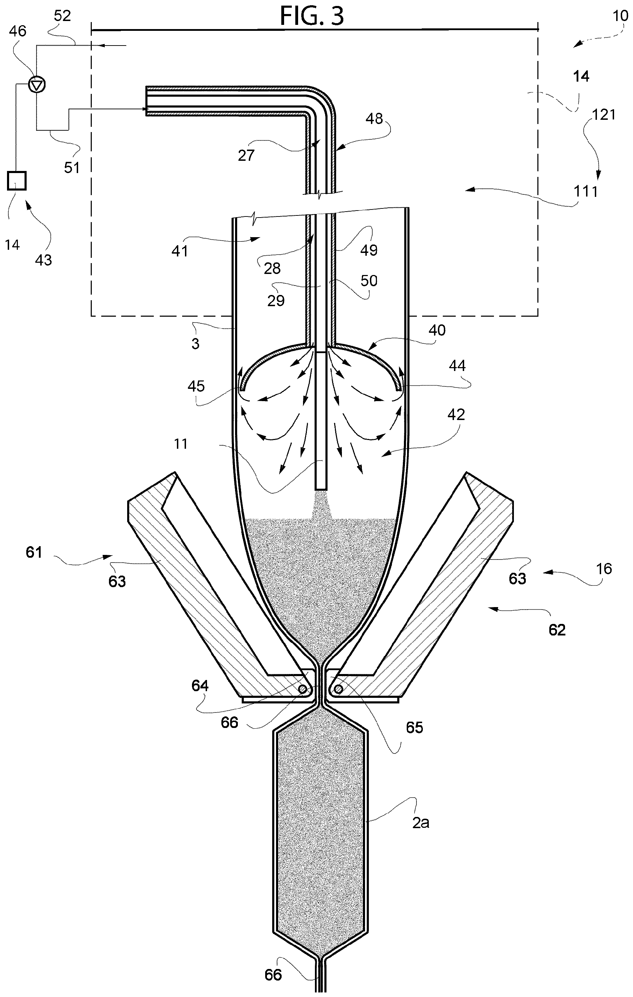

With particular reference to figure 3, the machine 1 comprises an isolation chamber 10 separating the inner environment 111 containing a sterile gas from an outer environment 121. The machine 1 also comprises a delimiting element 40 arranged, in use, within the tube 3 and designed to divide the tube 3 in a first space 41 being in fluidic connection with the inner environment 111 and a second space 42 being arranged downstream of the first space 41 along the tube advancement path.

Preferentially delimiting element 40 is designed such that, in use, fluidic channel 44 is provided by a gap between the inner surface of tube 3 and delimiting element 40, in particular a peripheral portion 45 of delimiting element 40.

Additionally, the machine 1 comprises a pressurizing device 43 configured to direct, in use, a flow of sterile gas into the second space 42 for obtaining a second gas pressure within the second space 42 that is higher than a first gas pressure within the first space 41.

Preferentially, pressurizing device 43 comprises a pumping device 46 adapted to withdraw sterile gas from inner environment 111, to pressurize (to compress) the sterile gas and to direct the pressurized sterile gas into second space 42. Preferentially, pumping device 46 is a rotary machine, even more particular a compressor.

Pressurizing means 43 also comprise:
- a first gas conduit 51 being in direct fluidic connection with pumping device 46, in particular the rotary machine, even more particular the compressor and a gas feeding pipe 48; and
- a second gas conduit 52 being in direct fluidic connection with inner environment 111 and pumping device 46.

Preferably, pressurizing device 43 comprise a gas feeding pipe 48 being at least indirectly fluidically connected with inner environment 11 and second space 42 for directing the sterile gas from inner environment 11 into second space 42. In particular, gas feeding pipe 48 is directly fluidically connected with second space 42. Preferentially, gas feeding pipe 48 is at least indirectly connected with pumping device 46, in particular the compressor.

In more detail, gas feeding pipe 48 comprises at least a main portion 49, which, in use, extends within tube 3. In particular, main portion 49 extends parallel to main pipe portion 28. Even more particular, at least main portion 49 and main pipe portion 28 are coaxial to one another.

With particular reference to Figure 3, filling device 11 comprise a filling pipe 27 being in fluid connection with a pourable product storage tank, which is adapted to store/provide for the pourable product to be packaged.

In particular, filling pipe 27 is adapted to direct, in use, the pourable product into tube 3. Preferentially, filling pipe 27 is, in use, at least partially placed within tube 3 for continuously feeding the pourable product into tube 3. In particular, filling pipe 27 includes a linear main pipe portion 28 extending within tube 3.

Even more particular, main pipe portion 28 comprises an upper section 29 and a lower section coupled to one another (preferably, removably). In further detail, lower section comprises an outlet opening from which the pourable product is fed, in use, into tube 3.

In this context, the control unit 14 is configured to control:
- the conveying device 5 and/or the package forming unit 16 so to vary an advancement speed of the tube 3 and a release speed of the formed and sealed packages 2 (or packs 2a) in order to modulate the production capacity of the packaging machine 1, and
- the pressurizing device 43 so to vary the second gas pressure.

The control unit 14 is configured to control both the variation in said second gas pressure and the variation in said advancement speed and/or release speed as a function of the measured accumulation level L. Hence, the variation in said second gas pressure and the variation in said advancement speed and/or release speed are dependent on each other.

With further reference to Figure 3, forming and sealing unit 8 comprises a package forming unit 16 including:
- a plurality of operative assemblies 61 (only one shown) and a plurality of counter-operative assemblies 62 (only one shown); and
- a track (not shown) adapted to advance the operative assemblies 61 and the counter-operative assemblies 62 along respective conveying paths. In particular, each of the operative assembly 61 and counter-operative assembly 62 advances cyclically along the respective conveying path. In even more particular, each of the operative assembly 61 and counter-operative assembly 62 is movable along said track independently from one another.

Furthermore, each operative assembly 61 and counter-operative assembly 62 comprises:
- a half-shell 63 adapted to contact tube 3 and to at least partially define the shape of packages 2;
- one of a sealing element 64 or a counter-sealing element 65, adapted to transversally seal tube 3 between adjacent packages 2 for obtaining transversal seal portions 66; and
- one of a cutting element (not shown and known as such) or a counter-cutting element (not shown and known as such) for transversally cutting tube 3 between adjacent packages 2, in particular between the respective seal portions 66.

In particular, each half-shell 63 is adapted to be controlled between a working position and a rest position by means of a driving assembly.

From the foregoing, it is clear how packaging machine 1 according to the present disclosure allows to implement a method for operating a packaging machine 1 for producing sealed packages 2 containing a pourable product starting from a web 4 of packaging material, the method comprising the steps of:
- advancing the web 4;
- folding the web 4 into a tube 3;
- longitudinally sealing the tube 3;
- filling the tube 3 with the pourable product;
- forming and transversally sealing the tube 3 so as to obtain a sequence of packs 2a;
- folding the packs 2a to obtain a plurality of packages 2;
- temporarily accumulating the folded packages 2 in a buffer 13;
- measuring an accumulation level L of packages 2 in buffer 13;
- modulating a production capacity of packaging machine 1, defined as a number of folded packages 2 produced per unit of time, as a function of the measured accumulation level L.

Preferably, the step of modulating includes the following sub-steps:
- varying an advancement speed of the tube 3 and a release speed of the formed and sealed packs 2a (packages 2),
- varying the second gas pressure (through pressurizing device 43, wherein a variation in said second gas pressure is dependent on a variation in said advancement speed and/or release speed and, preferably, on the accumulation level L.

Preferably, the step of modulating comprises adjusting the production capacity from a first production capacity P1 to a second production capacity P2 smaller than the first production capacity P1, and vice-versa.

Preferably, the method comprises the steps of:
- setting the production capacity to said second production capacity P2, if the measured accumulation level L is equal to or above of a first accumulation level threshold L1; and
- setting the production capacity to said first production capacity P1, if the measured accumulation level L is equal to or below of a second accumulation level threshold L2, the second accumulation level threshold L2 being smaller than the first accumulation level threshold L1.

Advantageously, the method further comprises the step of:
- maintaining the production capacity at said second production capacity P2 if the measured accumulation level L is comprised between the second accumulation level threshold L2 and the first accumulation level threshold L1.

Preferably, the method further comprises the step of:
- emitting or issuing a warning if the measured accumulation level L is equal to or above of a third accumulation level threshold L3, the third accumulation level threshold L3 being greater than the first accumulation level threshold L1.

Preferably, the method further comprises the step of:
- stopping the packaging machine 1 if the measured accumulation level L is equal to or above third accumulation level threshold L3.

Advantageously, the method further comprises the step of:
- detecting a stop event of the packaging machine 1, or of a downstream equipment configured to receive the formed, sealed and folded packages, the stop event being defined as an event, internal or external to the packaging machine 1, which requires or causes a temporary stopping of the packaging machine 1.

In particular, the step of modulating may be activated as a function of (i.e. responsive to) a stop event having been detected.

The method further may further comprise the steps of:
- identifying a type of said stop event;
- selectively activating or deactivating said step of modulating as a function of the identified type of stop event.

Preferably, the method comprises the steps of:
- determining a time duration corresponding to said stop event, by said step of identifying;
- calculating a time interval for the buffer 13 to reach third accumulation level threshold L3 with the production capacity set at said second production capacity P2 and as a function of the measured accumulation level L;
- performing the step of setting the production capacity to said second production capacity P2 if the determined time duration is smaller than the calculated time interval.

Conveniently, the method comprises the step of:
- varying the first accumulation level threshold L1 and/or the second accumulation level threshold L2 as a function of the calculated time interval.

Preferably, the step of determining a time duration comprises:
- accessing a database containing a set of pre-recorded or pre-determined types of stop events, each associated with a respective time duration value;
- comparing the identified type of stop event with the types of stop event contained in the database;
- extracting the corresponding time duration value.

Advantageously, the method further comprises the steps of:
- measuring an actual time duration of an occurred stop event;
- comparing the actual time duration of said occurred stop event with the determined time duration corresponding to the same stop event;
- updating said database by recording the measured actual time duration in the database if the actual time duration differs from the determined time duration.

From the foregoing it is also clear how packaging machine 1 and the related method for operating a packaging machine 1 enable to provide and/or implement a computer program product comprising instructions loadable in, and executable by, electronic processing resources and programmed to cause, when executed, said electronic processing resources to perform the steps of the method according to the above.

The advantages of packaging machine 1 and of the related method according to the present invention will be clear from the foregoing description.

In particular, an adaptive logic control of the production capacity of packaging machine 1 is effectively implemented while at the same time significatively reducing the number of production transients and, therefore, the stress on the components of the packaging machine.

This ultimately results in increased lifetime and reduced maintenance costs of the components of the packaging machine.

Clearly, changes may be made to packaging machine 1 and to the related method as described herein without, however, departing from the scope of protection as defined in the accompanying claims.

## Claims

1. Method for operating a packaging machine (1) for producing sealed packages (2) containing a pourable product starting from a web (4) of packaging material, the method comprising the steps of:
- advancing the web (4);
- folding the web (4) into a tube (3);
- longitudinally sealing the tube (3);
- filling the tube (3) with the pourable product;
- forming and transversally sealing the tube (3) so as to obtain a sequence of packs (2a);
- folding the packs (2a) to obtain a plurality of packages (2);
- temporarily accumulating the folded packages (2) in a buffer (13);
**characterized in that** the method further comprises the steps of:
- measuring an accumulation level (L) of packages (2) in said buffer (13);
- modulating a production capacity of the packaging machine (1), defined as a number of folded packages (2) produced per unit of time, as a function of the measured accumulation level (L).

2. Method as claimed in claim 1, wherein the step of modulating comprises adjusting said production capacity from a first production capacity (P1) to a second production capacity (P2) smaller than the first production capacity (P1), and vice-versa;
and wherein the method comprises the steps of:
- setting the production capacity to said second production capacity (P2), if the measured accumulation level (L) is equal to or above of a first accumulation level threshold (L1); and
- setting the production capacity to said first production capacity (P1), if the measured accumulation level (L) is equal to or below of a second accumulation level threshold (L2), the second accumulation level threshold (L2) being smaller than the first accumulation level threshold (L1).

3. Method as claimed in claim 2, and further comprising the step of:
- maintaining the production capacity at said second production capacity (P2) if the measured accumulation level (L) is comprised between the second accumulation level threshold (L2) and the first accumulation level threshold (L1).

4. Method as claimed in claim 2 or 3, and further comprising the step of:
- emitting or issuing a warning if the measured accumulation level (L) is equal to or above of a third accumulation level threshold (L3), the third accumulation level threshold (L3) being greater than the first accumulation level threshold (L1).

5. Method as claimed in any one of claims 2 to 4, and further comprising the step of:
- stopping the packaging machine (1) if the measured accumulation level (L) is equal to or above of a third accumulation level threshold (L3), the third accumulation level threshold (L3) being greater than the first accumulation level threshold (L1).

6. Method as claimed in any one of the claims 2 to 5, and further comprising the step of:
- detecting a stop event of the packaging machine (1) or of a downstream equipment configured to receive the formed, sealed and folded packages, the stop event being defined as an event which requires or causes a temporary stopping of the packaging machine (1) and/or of the downstream equipment;
wherein the step of modulating is activated as a function of a stop event having been detected.

7. Method as claimed in claim 6, further comprising the steps of:
- identifying a type of said stop event, in particular based on inputs received by an operator and/or signals received from sensors positioned in the packaging machine (1) and/or in the downstream equipment;
- selectively activating or deactivating said step of modulating as a function of the identified type of stop event.

8. Method as claimed in claim 7, and comprising the steps of:
- determining a time duration corresponding to said type of stop event;
- calculating a time interval for the buffer (13) to reach a third accumulation level threshold (L3), greater than the first accumulation level threshold (L1), with the production capacity set at said second production capacity (P2) and as a function of the measured accumulation level (L);
- performing the step of setting the production capacity to said second production capacity (P2) if the determined time duration is smaller than the calculated time interval.

9. Method as claimed in claim 8, wherein the step of determining a time duration comprises:
- accessing a database containing a set of pre-recorded or pre-determined types of stop events, each associated with a respective time duration value;
- comparing the identified type of stop event with the types of stop event contained in the database;
- extracting the corresponding time duration value.

10. Method as claimed in claim 9, and further comprising the steps of:
- measuring an actual time duration of an occurred stop event;
- comparing the actual time duration of said occurred stop event with the determined time duration corresponding to the same stop event;
- updating said database by recording the measured actual time duration in the database if the actual time duration differs from the determined time duration.

11. Method as claimed in any one of the foregoing claims,
wherein a delimiting element (40) is arranged within the tube (3) and divides the tube (3) in: a first space (41) being in fluidic connection with an inner environment (111) containing a sterile gas, and a second space (42) being arranged downstream of the first space (41) along the tube advancement path (Q);
wherein the method comprises directing a variable flow of sterile gas into the second space (42), through a pressurizing device (43), for obtaining a second gas pressure within the second space (42), said second gas pressure being higher than a first gas pressure within the first space (41);
wherein the step of modulating includes the following sub-steps:
- varying an advancement speed of the tube (3) and a release speed of the formed and sealed packs (2a),
- varying the second gas pressure, wherein a variation in said second gas pressure is dependent on a variation in said advancement speed and/or release speed.

12. A computer program product comprising instructions loadable in, and executable by, electronic processing resources and programmed to cause, when executed, said electronic processing resources to perform the steps of the method according to any of the foregoing claims.

13. Packaging machine (1) for producing sealed packages (2) containing a pourable product starting from a web (4) of packaging material, the packaging machine (1) comprising:
- conveying means configured to advance the web (4);
- a tube forming unit configured to fold the web (4) into a tube (3) and to longitudinally seal the tube (3);
- a filling device (11) for filling the tube (3) with the pourable product;
- a forming and sealing unit (8) configured to form the tube (3) and seal the tube (3) along successive transversal cross-sections thereof so as to obtain a sequence of packs (2a);
- a folding device (12) configured to sequentially fold the packs (2a) to obtain a plurality of packages (2);
- a buffer (13) arranged operatively downstream of the folding device (12) and configured to temporarily accumulate a number of folded packages (2) along an accumulation path (A) defined by the buffer (13); and
- a control unit (14);
wherein the control unit (14) is configured to measure an accumulation level (L) of packages (2) in the buffer (13) and to modulate a production capacity of the packaging machine (1), defined as a number of folded packages (2) produced per unit of time, as a function of the measured accumulation level (L).

14. Packaging machine as claimed in claim 13, wherein the control unit (14) is configured to:
- adjust said production capacity from a first production capacity (P1) to a second production capacity (P2) smaller than the first production capacity (P1), and vice-versa;
- set the production capacity to said second production capacity (P2), if the measured accumulation level (L) is equal to or above of a first accumulation level threshold (L1); and
- set the production capacity to said first production capacity (P1), if the measured accumulation level (L) is equal to or below of a second accumulation level threshold (L2), the second accumulation level threshold (L2) being smaller than the first accumulation level threshold (L1).

15. Packaging machine as claimed in claim 14, wherein the control unit (14) is configured to:
- maintain the production capacity at said second production capacity (P2) if the measured accumulation level (L) is comprised between the second accumulation level threshold (L2) and the first accumulation level threshold (L1); and/or
- emit or issue a warning if the measured accumulation level (L) is equal to or above of a third accumulation level threshold (L3), the third accumulation level threshold (L3) being greater than the first accumulation level threshold (L1); and/or
- stop the packaging machine (1) if the measured accumulation level (L) is equal to or above of said third accumulation level threshold (L3).

16. Packaging machine as claimed in claim 14 or 15, wherein the control unit (14) is configured to:
- detect a stop event of the packaging machine (1), defined as an event, internal or external to the packaging machine (1), which requires or causes a temporary stopping of the packaging machine (1);
- identify a type of said stop event;
- determine a time duration corresponding to said stop event;
- calculate a time interval for the buffer (13) to reach a third accumulation level threshold (L3), greater than the first accumulation level threshold (L1), with the production capacity set at said second production capacity (P2) and as a function of the measured accumulation level (L);
- set the production capacity to said second production capacity (P2) if the determined time duration is smaller than the calculated time interval.

17. Packaging machine as claimed in claim 16, wherein the control unit (14) is configured to:
- measure an actual time duration of an occurred stop event;
- compare the actual time duration of said stop event with the determined time duration corresponding to the same stop event;
- update a database containing a set of pre-recorded or pre-determined types of stop event, each associated with a respective time duration value, by recording the measured actual time duration in the database if the actual time duration differs from the determined time duration.

18. The packaging machine (1) as claimed in any one of claims 13 to 17, further comprising:
an isolation chamber (10) separating an inner environment (111) containing a sterile gas from an outer environment (121);
- a delimiting element (40) arranged, in use, within the tube (3) and designed to divide the tube (3) in a first space being in fluidic connection with the inner environment (111) and a second space (42) being arranged downstream of the first space (41) along the tube advancement path;
- a pressurizing device (43) configured to direct, in use, a flow of sterile gas into the second space (42) for obtaining a second gas pressure within the second space (42) that is higher than a first gas pressure within the first space (41);
wherein the control unit (14) is configured to control:
- the conveying means and/or the package forming unit (16) so to vary an advancement speed of the tube (3) and a release speed of the formed and sealed packs (2a) in order to modulate the production capacity of the packaging machine (1), and
- the pressurizing device (43) so to vary the second gas pressure,
wherein the control unit (14) is configured to control the variation in said second gas pressure and the variation in said advancement speed and/or release speed as a function of the measured accumulation level (L).
